# EUROPEAN PATENT APPLICATION

(11) **EP 0 883 016 A1**
(43) Date of publication of application: **09.12.1998**
(21) Application number: 98110347.6
(22) Date of filing: 05.06.1998
(51) Int. Cl.: G02F 1/1335

(54) **Method for producing phase retarder films**

(30) Priority: 06.06.1997 JP 149267/97
(71) Applicant: Sumitomo Chemical Company, Limited, Chuo-ku Osaka 541-8550 (JP)
(72) Inventor: Namioka, Makoto, Nishinomiya-shi, Hyogo (JP)
(74) Representative: VOSSIUS & PARTNER

(57) **Abstract**

The present invention provides a method for producing a phase retarder film wherein a resin layer having at least one kind of photoreactive substituent is irradiated with parallel beams. The method of the present invention enables the production of a large area phase retarder film with ease as compared with conventional methods wherein irradiation of linearly polarized ultraviolet rays, electrostatic field, or magnetostatic field is conducted, and hence it is suitable for the industrial application.

## Description

The present invention relates to a novel method for producing a phase retarder film.

In recent years, there has been a demand for an active matrix drive twisted nematic liquid crystal display (hereinafter, referred to as a AM-TN-LCD) excellent in image quality. With such an AM-TN-LCD, degradation in contrast and a change in hue when viewed from the direction oblique to the normal axis perpendicular to the display is larger compared with the case when viewed from the front direction, and hence there has been a demand for the improvement thereof, i.e., the improvement in viewing angle.

Accordingly, it has been widely adopted to provide a phase retarder film on the AM-TN-LCD. As such a phase retarder film, for example, there have been proposed a phase retarder film using twisted nematic liquid crystals, and having a helical axis tilted with respect to the normal of the film (JP-A-6-250166),
and a phase retarder film using discotic liquid crystals, and having an optical axis tilted with respect to the normal of the film (JP-A-6-214116).

However, these employ liquid crystals, and hence the production thereof with stability is difficult.

In WO -A- 96/10773, there has been disclosed a phase retarder film including an optical element which is a Ta₂O₅ obliquely vapor deposited layer having a positive biaxial optical anisotropy and having a tilted columnar structure having a tilt between 30 degrees and 60 degrees with respect to the normal of the deposited surface. However, this requires a highly developed vacuum process, and hence is not suitable for the production on an industrial scale.

There has been also proposed a method for producing a phase retarder film by irradiating a sheet having a photo-isomerative material with linearly polarized ultraviolet rays in JP-A-6-265728.

However, it is difficult to continue to irradiate the one with a large area with linearly polarized ultraviolet rays for a long time, and hence it cannot be said to be suitable for industrial application.

Further, there has been disclosed a method for producing a phase retarder film by allowing a photoreactive material to react while irradiating the photoreactive material with an electrostatic field or magnetostatic field with a specific direction (JP-A-5-215921).

However, it is difficult to produce a phase retarder film on an industrial scale with this method as in the case with the method in which the irradiation of linearly polarized ultraviolet rays is conducted.

Thus, it has been known that a phase retarder film is effective of which the tilt angle dependency of the retardation value measured with the film being tilted becomes asymmetrical in improving the viewing angle of a LCD. However, the production method capable of producing such a phase retarder film with ease even if it has a large area, and being industrially satisfactory is yet to be known.

Under these circumstances, it is the object of the present invention to provide a production method of a phase retarder film implementable on an industrial scale, and capable of producing even a phase retarder film effective in improving the viewing angle of a LCD.

This object has been achieved by the surprising finding that the phase retarder film can be produced with ease by irradiating a resin layer including a specific substituent with parallel beams, thereby leading to the present invention.
Figure 1 is a schematic diagram illustrating a method for producing a phase retarder film of the present invention;
Figure 2 is a schematic diagram illustrating an other method for producing a phase retarder film of the present invention;
Figure 3 is a schematic diagram showing a method for measuring the angle dependency of the retardation value of the phase retarder film;
Figure 4 is a diagram showing the relationship between the angle (θ) and the retardation value of a phase retarder film obtained according to example 1;
Figure 5 is a diagram showing the relationship between the angle (θ) and the retardation value of a phase retarder film obtained according to example 2;
Figure 6 is a diagram showing the relationship between the angle (θ) and the retardation value of a phase retarder film obtained according to example 3;
Figure 7 is a diagram showing the relationship between the angle (θ) and the retardation value of a phase retarder film obtained according to example 4;
Figure 8 is a diagram showing the relationship between the angle (θ) and the retardation value of a phase retarder film obtained according to example 5; and
Figure 9 is a diagram showing the relationship between the angle (θ) and the retardation value of a phase retarder film obtained according to example 6.

The photoreactive substituent in the present invention is a substituent having the property to be photo-excited to react. Examples thereof include substituents which are caused to [2+2] cycloaddition on irradiation with light, and substituents which undergo cis-trans isomerization on irradiation with light.

Examples of the substituents which are caused to [2+2] cycloaddition on irradiation with light include a cinnamoyl group, 2-nitroethenylphenyl group, 2-cyanoethenylphenyl group, 2-(2-pyridyl)ethenylphenyl group, 2-(N-methyl-2-pyridyl)ethenylphenyl group, β-styryl acryloyl group, β -furyl acryloyl group, and anthranil group. With these substituents, two of which are caused to [2+2] cycloaddition on irradiation with light.

Examples of the substituents which undergo cis-trans isomerization include a phenylazophenyl group, benzylideneaminophenyl group, and styrylphenyl group. These substituents undergo cis-trans isomerization on irradiation with light.

The resin layer includes at least one kind of mutually combining substituents, or substituents which undergo cis-trans isomerization, or at least one kind of both substituents.

As these photoreactive substituents, the substituents having the property to be excited by ultraviolet rays to react are preferable so as not to be allowed to react during using a phase retarder film in visible light.

Examples of the resin layer including a photoreactive substituent include a layer made of a polymer having at least one kind of monomeric unit having a photoreactive substituent, and a layer made of a mixture of at least one kind of polymer having a photoreactive substituent and other resin.

It is noted that the monomeric unit may be a monomeric unit having two or more kinds of photoreactive substituents.

Examples of the monomer having photoreactive substituents include vinylcinnamate derivatives such as vinylcinnamate, vinyl-p-methoxycinnamate, vinyl-3,4-dimethoxycinnamate, vinyl-p-nitrocinnamate, and vinyl-α -cyanocinnamate; chalcone derivatives such as p-cinnamoyl styrene, p-cinnamoyl phenylacrylate, p-cinnamoyl phenyl methacrylate, 3-(p-cinnamoyl phenyloxy)-2-hydroxypropyl methacrylate, and 2-(p-cinnamoyl phenyloxy)ethylacrylate; β-furyl acrylate derivatives such as vinyl-β-furyl acrylate; styryl pyridine derivatives such as p-(2-pyridylethenyl)styrene and p-(2-pyrimidylethenyl)styrene; and coumarin derivatives such as 7-coumarilacrylate.

The polymer having such a monomeric unit may be a homopolymer of the above-described monomers, or a copolymer containing at least one kinds of the above-described monomers. The photoreactive substituent may also exist in the side chain, or exist in the main chain of the polymer.

Examples of the polymer in which a photoreactive substituent exists in its side chain include polymers having polyvinylcinnamate derivative structures shown in the following structural formulae P-01 through p-05; polymers having chalcone derivative structures shown in the structural formulae P-06 through P-10; a polymer having a β-furylacrylate structure shown in the structural formula P-11; polymers having styrylpiridine structures shown in the structural formulae P-12 and P-13; and a polymer having a coumarin structure shown in the structural formula P-14.

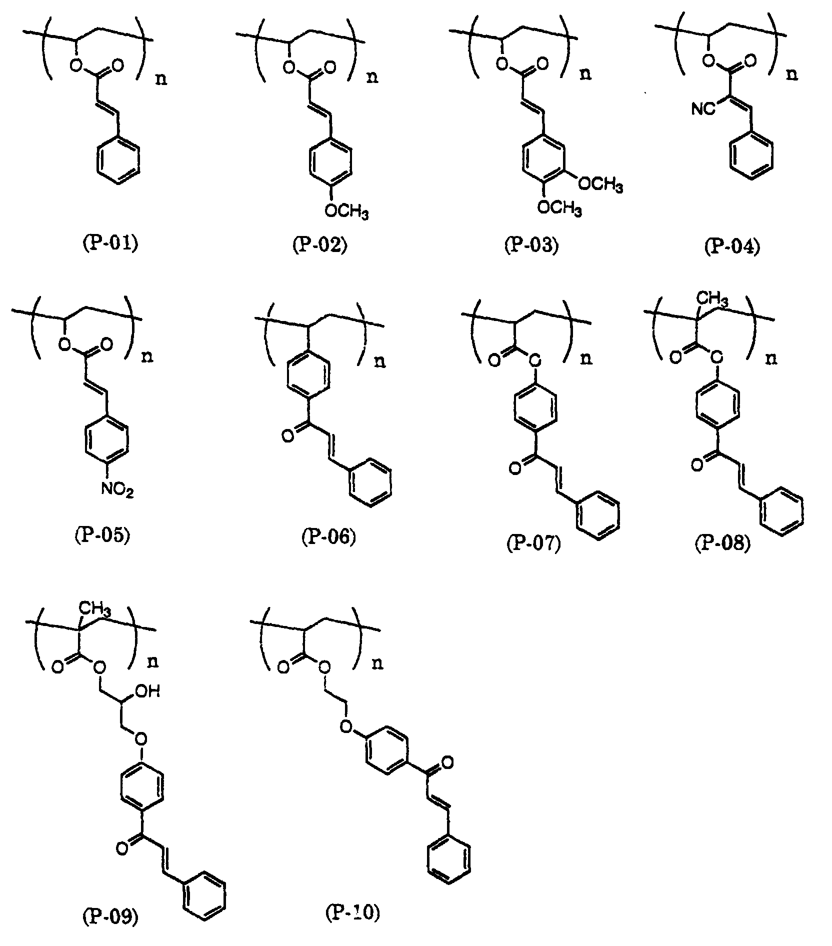

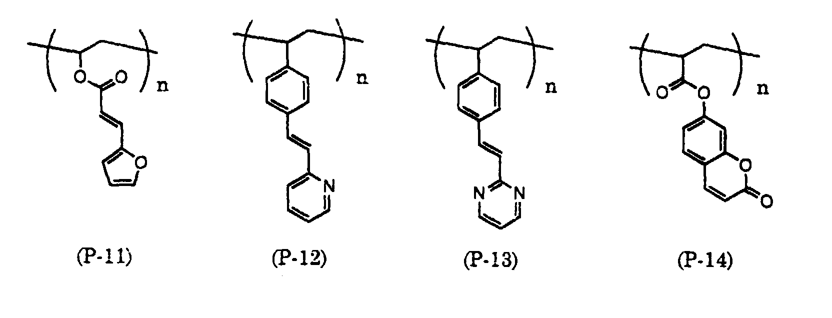

Such polymers in which photoreactive substituents exist in their side chains may have the other monomeric unit as a copolymerization component. Examples of the other monomers include olefin such as ethylene and propylene, acrylic ester, methacrylic ester and styrene.

In this case, the content of the monomer having photoreactive substituents in the polymer is appropriately selected corresponding to the magnitude of the retardation value of the desired phase retarder film.

Examples of the polymer in which a photoreactive substituent exists in its main chain include polymers having structures shown in the following structural formulae P-15 through P-22.

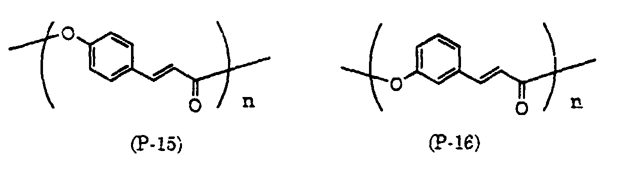

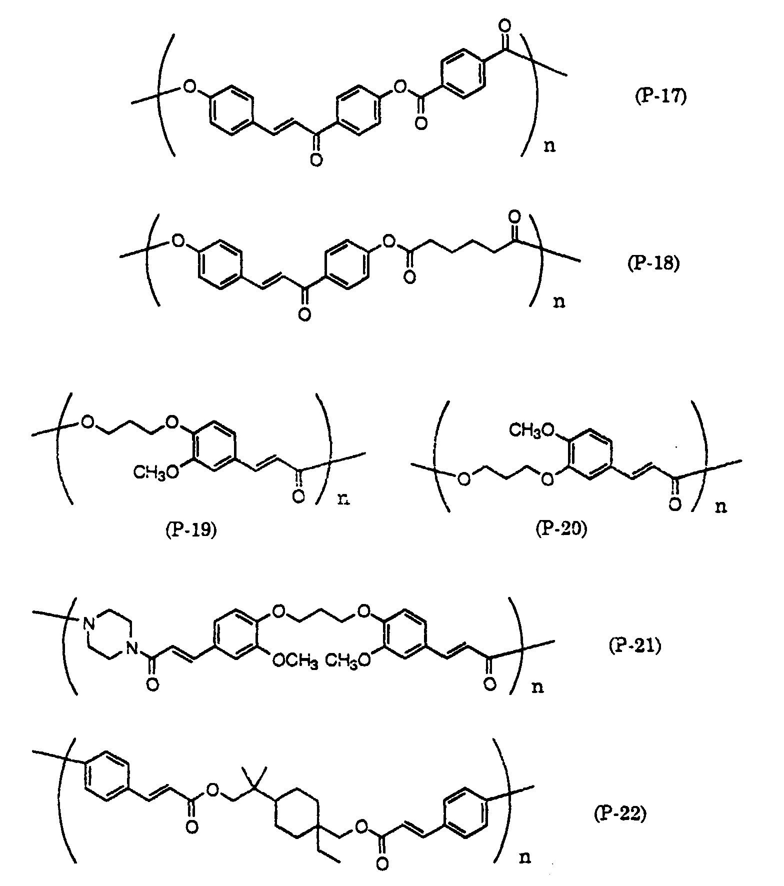

Such a polymer in which a photoreactive substituent exists in its main chain may have the other monomeric unit as a copolymerization component. Examples of the other monomers include dihydroxy compounds such as ethylene glycol, propylene glycol, tetramethylene glycol, bisphenol A, hydroquinone, 4,4'-dihydroxydiphenyl; dicarboxylic acids such as adipic acid, terephthalic acid, 2,6-dicarboxynaphthalene; hydroxycarboxylic acids such as p-hydroxybenzoic acid and lactic acid. In this case, the content of the monomer having photoreactive substituents in the polymer is appropriately selected corresponding to the magnitude of the retardation value of the desired phase retarder film.

The polymers having at least one kind of monomeric unit including photoreactive substituents in its main chain can be used to obtain a phase retarder film excellent in transparency, and hence are preferable.

The resin to be mixed with the polymer having a photoreactive substituent is not specifically limited if it is resin having transparency. It is also preferable to be the one capable of dissolving the compound without causing the phase separation. Examples of such resin include acrylic resin such as polymethyl acrylate and polymethyl methacrylate; polycarbonate; and polyvinylalcohol. These resins can be used in mixture of two or more kinds thereof.

To obtain a resin layer from such polymers or mixtures of polymer having a photoreactive substituent and other resin, for example, the polymer or mixture may be dissolved in a solvent such as methylene chloride, after which the resultant solution is coated onto a base material such as glass plate, or film to be dried. Alternatively, the resultant solution is coated onto a smooth mold, after which the solvent is vaporized to form a film, followed by peeling of the film to obtain a resin layer. Further, the formation in film form by extrusion molding, or the like may be adopted. The thickness of the resin layer is normally about 0.5 µ m, or more, and preferably in the range of about 0.5 to 500 µ m.

In the present invention, such a resin layer is irradiated with parallel beams to produce a phase retarder film.

The parallel beams to be used for irradiation are the light beams of which the ray directions are roughly in one direction. Irradiation of normally about 80 % or more of the overall light energy is carried out at angles within ±20 degrees, preferably within ±15 degrees, and more preferably ±10 degrees with respect to the main light beams direction.

It is enough only that the wavelength of the parallel beams is the wavelength capable of allowing the photoreactive material to be used to react, and the wavelength of the parallel beams is appropriately selected corresponding to the photoreactive material to be used. It is preferable that the irradiation of ultraviolet rays is performed using a substituent which is excited by ultraviolet rays to react so as not to allow the photoreactive material to react during using the obtained phase retarder film in visible light.

As a light source, conventional light sources such as high pressure mercury lamp, metal halide lamp, and laser are used.

Parallel beams can be obtained with ease, for example, by a method in which light beams from a light source are made parallel to one another by a convex lens, or the like; a method in which light beams from a light source are gathered by a reflecting mirror to be passed through a louver; a method using a laser beam; and the like.

The irradiation energy of parallel beams is appropriately selected corresponding to the photoreactive material and the amount of the material to be used, the thickness of the resin layer, and the like. It is normally in the range of about 1 J/cm² and 10 kJ/cm², and preferably in the range of about 10 J/cm² and 5 kJ/cm².

The resin layer is irradiated with parallel beams, and the parallel beams are allowed to pass through the resin layer. This causes the photoreactive substituent to be excited to react, resulting in a phase retarder film having an optical axis in a specific direction. The optical axis of the resulting phase retarder film is determined by the direction of the parallel beams passing through the resin layer. Accordingly, in order to obtain a phase retarder film having a desired optical axis, it is enough that the angle of irradiation of parallel beams onto the resin layer is appropriately selected in consideration of the refractive index of the resin layer.

The phase retarder film thus obtained may be used without being peeled off the base material at which the resin layer is provided and with being held in the state of integral lamination with the base material, or may be peeled off the base material to be used.

Alternatively, it can be laminated with other film to be used. The other film preferably has an in-plane retardation value of about 100 nm or less. It is also preferable that the film is a film which selectively cuts off the light with a wavelength allowing the photoreactive material used to react. When a phase retarder film is used without being peeled off the base material, the other film is normally laminated onto the surface opposite to the base material side of the phase retarder film. When the phase retarder film is used with being peeled off the base material, the other film may be laminated onto the both sides of the phase retarder film, or may be laminated onto only one side thereof

According to the conventional methods in which irradiation of linearly polarized ultraviolet rays, electrostatic field, or magnetostatic field is carried out, it is difficult that a large area one is irradiated for a long time. As opposed to the conventional methods, the method of the present invention is implemented by using parallel beams obtainable with ease, and hence it is possible that a large area one is irradiated for a long time. This enables the production of a phase retarder film with a large area with ease, and hence the method of the present invention is suitable for industrial application.

### EXAMPLES

The present invention will be described in more details by way of examples below.

### [Synthesis of polymers]

### (1) Synthesis of polymer P-02

In a light-proof state, and in a stream of nitrogen, 25.9 g of p-methoxycinnamic acid was dissolved on heating in 25 ml of thionyl chloride, and the resultant solution was allowed to react under reflux for 1 hour. The unreacted thionyl chloride was completely removed by distillation under reduced pressure. The resultant solid was dissolved in 25 ml of dry tetrahydrofuran, which was then added dropwise in a solution obtained by dissolving 5.3 g of polyvinylalcohol (manufactured by Kuraray Co., Ltd., degree of polymerization 1700) in 50 ml of dry tetrahyarofuran to be allowed to react under reflux for 2 hours.

The reaction solution was cooled, after which the solution was precipitated in 1500 ml of methanol to obtain a polymer P-02 with the above-described structure. The crude polymer was redissolved in chloroform, followed by reprecipitation in methanol to obtain 17.7 g of purified polymers P-02.

### (2) Synthesis of Polymer P-19

In a light-proof state, 6.9 g of concentrated sulfuric acid was added in a solution obtained by dissolving 50 g of ferulic acid in 170 ml of methanol, after which the resultant solution was heated under reflux for 2 hours. The reaction mixture was cooled, and poured into 1000 ml of ice water. The precipitated solid was filtered and washed with water, followed by vacuum drying to obtain 52.8 g of methyl ferulate.

Into a mixture of 10 g of methylferulic acid, 40 ml of acetonitrile, 38.8 g of potassium carbonate, and 0.18 g of tetra-n-butylammonium bromide, was add dropwise 15.6 g of 3-bromopropanol over a period of 30 minutes with heating under reflux in a stream of nitrogen, after which the mixture was allowed to react for 4 hours.

After cooling, the reaction mixture was filtrated, and the filtrate was concentrated. The residue was redissolved in ethyl acetate, and washed with a sodium carbonate solution and water. The organic layer was dried over anhydrous sodium sulfate, and then concentrated to obtain monomers of the polymer P-19 with the above-described structure. The crude product was recrystallized from toluene to be purified.

A flask in which 10.0 g of purified monomers were contained was allowed to heat up to 100 °C on oil bath, and degassing under vacuum and introduction of nitrogen were repeated with the monomers being in a molten state to conduct the degassing within the system. The system was returned to atmospheric pressure with nitrogen, after which a 20 wt% solution of 0.534 g of tetraisopropoxytitanium in toluene was added. Pressure was reduced to 3 mmHg, and the volatilization of toluene was stopped, after which the temperature was increased up to 200 °C over a period of 1 hour.

After cooling the reactor, the contents was extracted with 100 ml of chloroform, after which the extract was reprecipitated in methanol to obtain the polymer P-19.

### (3) Synthesis of Polymer P-20

A polymer P-20 with the above-described structure was obtained in the same manner as in the case of the synthesis of the polymer P-19 except that isoferulic acid was used in placed of the ferulic acid.

### (4) Synthesis of Polymer P-21

In a light-proof state, into a mixture of 25.0 g of methylferulic acid, 250 ml of acetonitrile, 89 g of potassium carbonate, and 0.41 g of tetra-n-butylammonium bromide, was add dropwise 12.3 g of 1,3-dibromopropane over a period of 30 minutes with heating under reflux in a stream of nitrogen, after which the mixture was allowed to react for 4 hours.

After cooling, the reaction mixture was filtered, and then the filtrate was concentrated. The residue was then redissolved in ethyl acetate, and washed with a sodium carbonate solution, and water. The organic layer was dried over anhydrous sodium sulfate, and then concentrated and evaporated to dryness to obtain dimethyl ester. The crude product was recrystallized from toluene to be purified.

To a mixture of 19.9 g of the obtained diester and 150 ml of methanol, was added 40 ml of 5N aqueous solution of caustic potash. The resulting mixture was heated with stirring for 4 hours at a temperature of 80 °C. The reaction solution was cooled, and then acidified with 6 N hydrochloric acid, after which the deposited precipitate was filtrated and dried to obtain dicarboxylic acid.

A mixture of 11 g of the obtained dicarboxylic acid, 2 g of piperazine, 7.2 g of triphenylphosphite, 10 ml of pyridine, 0.5 g of lithium chloride, and 40 ml of N-methyl-2-pyrolidone was heated with stirring under nitrogen at a temperature of 100 °C for 3 hours.

The reaction mixture was added to 1000 ml of methanol, and the resulting precipitate was filtered and dried to obtain the polymer P-21 with the above-described structure. The obtained polymer was reprecipitated in methanol from chloroform to be purified.

### (5) Synthesis of Polymer P-22

In a light-proof state, 1.63 g of hard coating agent (KAYARAD R-604, manufactured by NIPPON KAYAKU CO., LTD.), 2.03 g of 4,4'-diiodo biphenyl, and 2.89 g of 1,8-bis(N,N-dimethylamino)naphthalene were dissolved in 20 ml of N,N-dimethylformamide in a stream of nitrogen, to which was added 11.3 mg of palladium (II) acetate and 60.9 mg of tri-m-toluoylphosphine. The resulting mixture was heated to 100°C in a stream of nitrogen for 4 hours, after which the reaction mixture was poured into 200 ml of methanol, allowing a polymer P-22 with the above-described structure to precipitate. The obtained polymer was reprecipitated in methanol from chloroform to be purified.

### Example 1

In a light-proof state, a solution obtained by dissolving 1 g of polyvinyl cinnamate (polymer P-01 with the above-described structure; average degree of polymerization 1700, manufactured by Aldrich Chemical company, Inc.) in 3 g of methylene chloride was coated with a wet thickness of 200 microns on a glass substrate. Subsequently, the coated solution was dried at a temperature of 60°C for 1 hour in a light-proof state, and further subjected to vacuum drying at a temperature of 60°C overnight, resulting in a resin layer (thickness 40 µ m) of the polymer P-01 on a glass substrate.

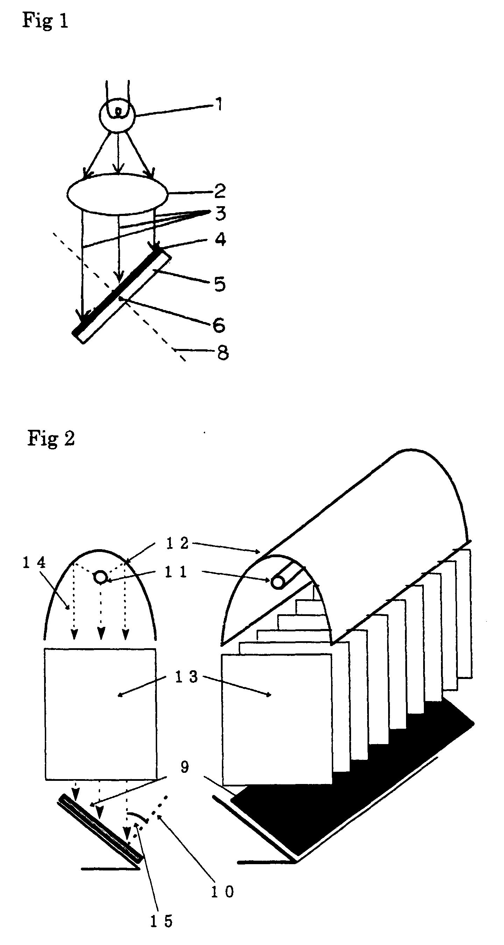

Next, using a ultraviolet irradiation setup (HLR 100T-1: manufactured by SEN LIGHTS CORPORATION) and a convex lens (manufactured by SIGMA KOKI Co. Ltd.), irradiation of parallel beams was carried out according to a method shown in Figure 1. That is, a resin layer (4) formed on the glass substrate (5) was irradiated with the parallel beams (irradiation energy of ultraviolet rays : 2kJ/cm²) (3) obtained using a high pressure mercury lamp (1) and a convex lens (2) from a direction at 45 degrees relative to the normal (8) thereof, resulting in a phase retarder film. It was noted that there was no external change between the resin layer (4) prior to irradiation of ultraviolet rays and the obtained phase retarder film.

The angle range in which 80% or more of the overall light energy was irradiated was measured as follows.

The aluminum plate formed a hole with a diameter of 5 mm ⌀ was placed instead of the resin layer, and a distribution of the light leaked from a hole was measured in 10 cm lower part of aluminum plate using a UV power meter. The angle range in which 80% or more of the overall light energy was calculated from the distibution of the light measured.

The angle range in this example was ±11.5 degrees with respect to the main light beams direction.

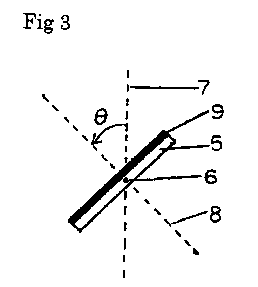

Then, the angle dependency of the retardation value representing the characteristics of the phase retarder film was measured according to Senarmont method with a polarizing microscope (manufactured by NIKON Co. Ltd.) being attached with an inclined instrument. There was shown the overview thereof in Figure 3. While the glass substrate (5) was being rotated about its irradiation tilt axis (6) with a phase retarder film (9) being held on the glass substrate (5), the retardation value from the direction of a fiducial line (7) was determined to carry out the measurement. The angle between the normal direction (8) and the fiducial line (7) of the glass substrate was defined as θ.

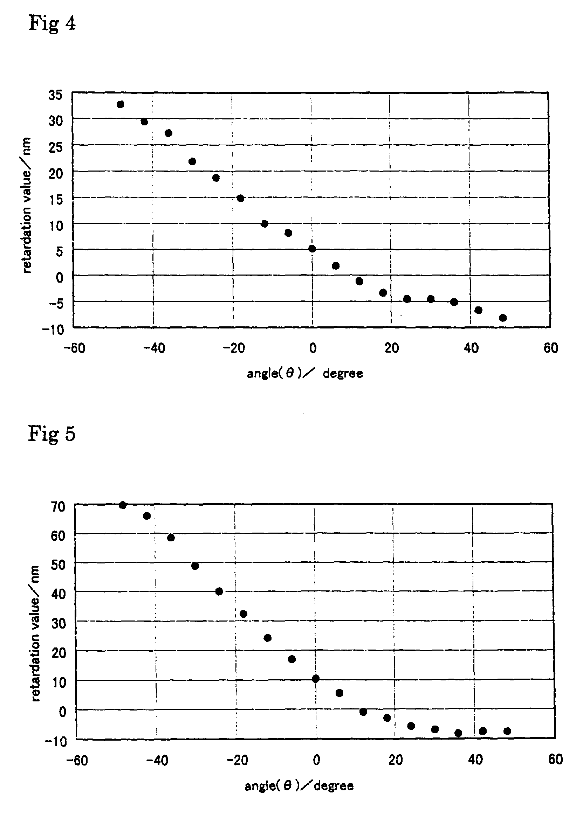

There was shown the relationship between the angle (θ) and the retardation value of the phase retarder film in Figure 4.

### Example 2

An experiment was performed in the same manner as in example 1, except that the polymer P-02 obtained above was used in place of the polymer P-01. There was shown the results of measurement of the angle dependency of the retardation value of the obtained phase retarder film in Figure 5.

### Example 3

The polymer P-19 obtained as described above was subjected to hot press at a temperature of 200°C for 20 minutes between specular stainless steel plates using a 38-micron PET film as a spacer to obtain a film with a thickness of 50 microns. The pressed film thus obtained was irradiated with parallel beams by means of a ultraviolet irradiation setup (manufactured by Japan Storage Battery Co., Ltd.) with a method shown in Figure 2. That is, the obtained film (9) was irradiated with parallel beams (irradiation energy of ultraviolet rays: 12J/cm²) (14) from the direction at 45 degrees to the normal (10) thereof at an irradiation distance of 30 cm to obtain a phase retarder film. The parallel beams (14) were obtained by using a 60-cm-long high pressure mercury lamp (11), a parallel beam type reflecting mirror (12), and 20-cm-long louvers spaced at intervals of 2 cm. It was noted that there was no external change between the film (9) prior to irradiation of ultraviolet rays and the obtained phase retarder film.

The angle range in which 80% or more of the overall light energy was irradiated was measured in the same manner as in example 1.

The angle range in this example was ±5 degrees in a parallel direction to the lamp length, and ±10 degrees in the perpendicular direction to the lamp length.

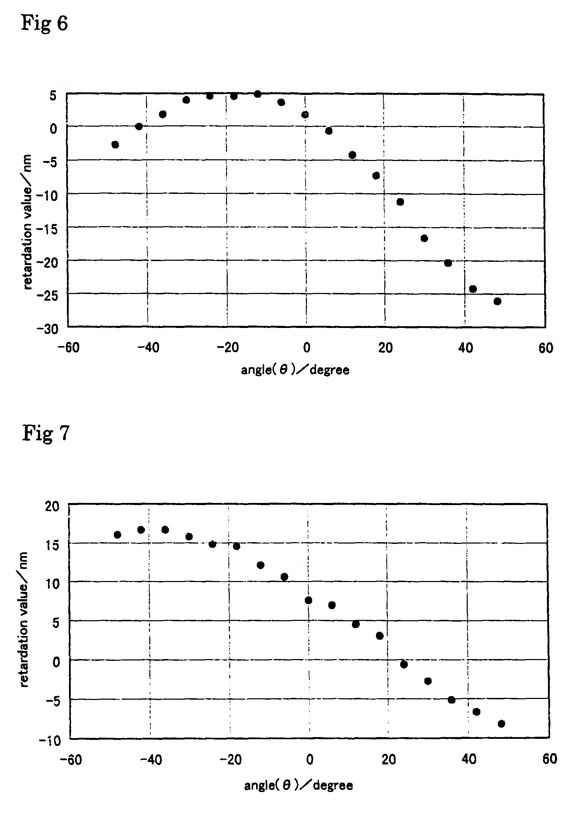

There was shown the results of measurement of the angle dependency of the retardation value of the phase retarder film conducted in the same manner as in example 1 in Figure 6.

### Example 4

An experiment was performed in the same manner as in example 3, except that the polymer P-20 obtained above was used in place of the polymer P-19. There was shown the results of measurement of the angle dependency of the retardation value of the obtained phase retarder film in Figure 7.

### Example 5

In a light-proof state, a solution obtained by heating to dissolve 1 g of the polymer P-21 obtained above in 2.5 g of dimethyl sulfoxide was coated onto a glass substrate heated to 100°C with a wet thickness of 200 microns. Subsequently, the coated solution was dried at a temperature of 80°C for 1 hour in a light-proof state, and further subjected to vacuum drying at a temperature of 60°C overnight, resulting in a resin layer (thickness 40 µ m) of the polymer P-21 on the glass substrate.

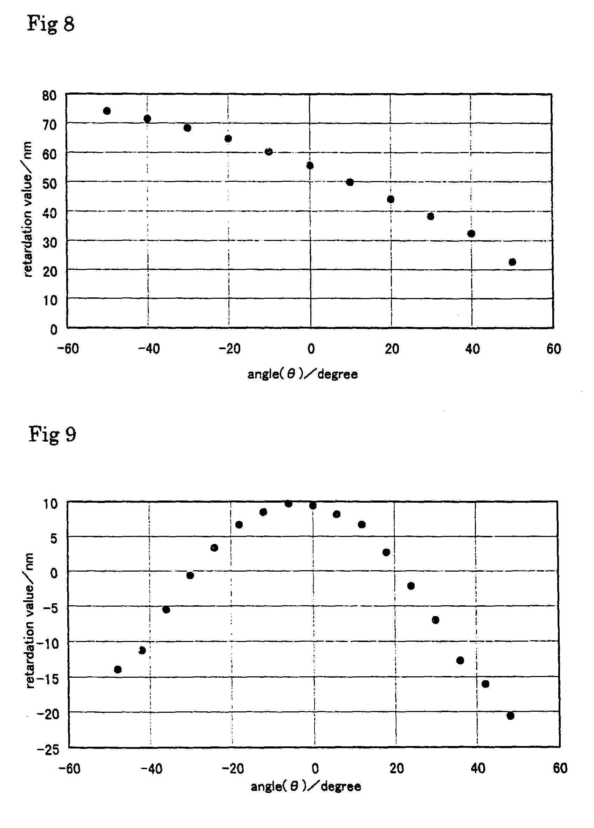

An experiment was performed in the same manner as in example 3 using the resin layer of the polymer P-21 formed on the glass substrate. It was noted that there is no external change between the resin layer prior to irradiation of ultraviolet rays and the obtained phase retarder film. There was shown the results of measurement of the angle dependency of the retardation value of the obtained phase retarder film in Figure 8.

### Example 6

An experiment was performed in the same manner as in example 1, except that the polymer P-22 obtained above was used in place of the polymer P-01. There was shown the results of measurement of the angle dependency of the retardation value of the obtained phase retarder film in Figure 9.

## Claims

1. A method for producing a phase retarder film, wherein a resin layer having at least one kind of photoreactive substituent is irradiated with parallel beams.

2. A method for producing a phase retarder film according to claim 1, wherein the resin layer having a photoreactive substituent is a layer comprising a polymer having at least one kind of monomeric units having a photoreactive substituent.

3. A method for producing a phase retarder film according to claim 1, wherein the resin layer having a photoreactive substituent is a layer comprising a mixture of at least one kind of a polymer having a photoreactive substituent and another resin.

4. A method for producing a phase retarder film according to claims 1, 2, or 3, wherein the photoreactive substituents are the substituents which cause a [2+2] cycloaddition on irradiation with light.

5. A method for producing a phase retarder film according to any one of claims 1 through 4, wherein the photoreactive substituent is a cinnamoyl group.

6. A method for producing a phase retarder film according to claims 1, 2, or 3, wherein the photoreactive substituent is a substituent which undergoes cis-trans isomerization on irradiation with light.

7. A method for producing a phase retarder film according to claim 1, wherein the parallel beams are parallel ultraviolet rays.

8. A method for producing a phase retarder film according to claim 1, wherein the irradiation energy of the parallel beams is in the range of 1 J/cm² and 10 kJ/cm² .

9. A method for producing a phase retarder film according to claim 1, 7, or 8, wherein the parallel beams are the light beams of which about 80 % or more is irradiated at angles within ±20 degrees with respect to the main light beams direction.
